# EUROPEAN PATENT SPECIFICATION

(11) **EP 1 375 779 B1**
(45) Date of publication and mention of the grant of the patent: **14.06.2006**
(21) Application number: 03022036.2
(22) Date of filing: 21.12.2001
(51) Int. Cl.: E04F 15/02, E01C 17/00, F21S 8/02, F21V 8/00, G09F 19/22, E04B 5/46, E04C 2/54, C03C 17/04

(54) **Method for fabricating an anti-skid glass pane for construction, lighting engineering and decoration**
Verfahren zur Herstellung einer rutschfesten Glasscheibe für Konstruktion, Lichttechnik und Dekoration
Procédé pour fabriquer une dalle de verre antidérapante pour construction, technique d'illumination et decoration

(30) Priority: 21.12.2000 IT MO20000281
(43) Date of publication of application: 02.01.2004
(62) Divisional of application: 01830796.7
(73) Proprietor: TECNO SECURVETRO S.r.l., 40050 Villanova Di Castenaso (Bologna) (IT)
(72) Inventor: Landi, Paolo, 40068 San Lazzaro Di Savena (Bologna) (IT)
(74) Representative: Lanzoni, Luciano

(56) References cited:
- DE-A- 2 320 862
- DE-A- 10 003 404
- DE-A- 19 719 697
- DE-C- 19 629 241

## Description

The present invention relates to a method for fabricating a glass pane, in particular to be used as a paving element, serving anti-skid functions. The same pane can also be used in the lighting engineering sector as a diffuser of light conveyed into its thickness, known e.g. from DE-A-19719697.

Glass is being used more and more widely in the construction, lighting engineering and decoration field by architects and decorators. When it is used as a paving element or as a treaded surface, it would be preferable to render the surface skid-proof.

Anti-skid tiles are known, obtained by sanding or etching the treaded surface. Such tiles have several drawbacks. In particular, the etchings and sanding tend to damage the surface of the glass, weakening its mechanical strength. Hence, it is not always easy to obtain efficient anti-skid surfaces.

In the lighting engineering sector, moreover, to illuminate spaces or other environments with indirect light, light sources are generally used which are always surrounded (posteriorly, anteriorly or completely) by casings which may also be closed, generally made of glass, which act as refractors, diffusers or combinations thereof. At the most, the light source is placed in front of the main surface of development of the diffuser, refractor element, etc.. Therefore, said systems are bulky and unsuitable for use in pavements in which a certain degree of transparency of the structure and/or of masking of the light sources from direct view is required, in addition to an indirect type of lighting.

The aim of the present invention is to overcome the aforesaid drawbacks, making available a method for fabricating a glass pane with an efficient anti-skid surface and obtained in such a way as not to weaken the mechanical characteristics of the glass.

Another aim of the present invention is to make available a method for fabricating an anti-skid glass pane which can be used effectively as a diffuser of light conveyed into its thickness, possibly able to illuminate both the underlying and the overlying space.

A further aim of the present invention is to make available a method for fabricating a glass pane that diffuses light in a spatially selective manner and is able to highlight drawings and/or graphic symbols reproduced thereon, possibly in colour.

Said aims and others besides, which shall become more readily apparent in the course of the description that follows, are reached, in accordance with the present invention, by a method for fabricating an anti-skid glass pane for construction, lighting engineering and decoration purposes as characterised and described in the accompanying claims.

The invention is described in greater detail below with the aid of the drawings, which show an embodiment provided purely by way of non limiting example.
- Figures 1 and 2 show a schematic perspective view, without particular regard to proportions, of two variations of a first embodiment of the pane obtainable by means of the method of the invention;
- Figures 3 , 4 a nd 5 schematically show a section view, without particular regard to proportions, of a detail of as many embodiments of the pane obtainable by means of the method of the invention.

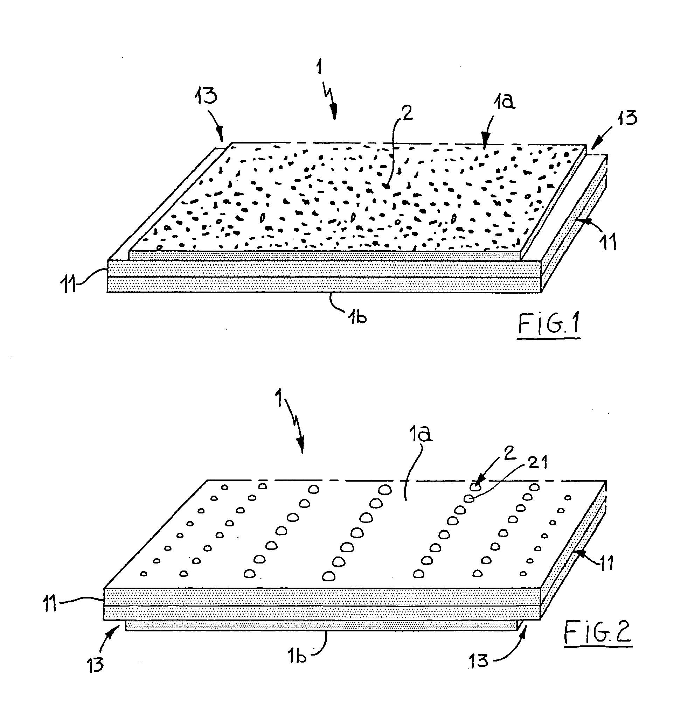

With reference to Figures 1 through 5, an anti-skid glass pane 1 for construction, lighting engineering and decoration purposes, characteristically comprises, distributed over at least one of its larger faces 1a, 1b, a plurality of small added projections 2, made of a material whose mechanical consistency is substantially comparable to that of glass and so shaped and distributed as to make skid-proof at least areas of the larger face 1a, 1b whereon they are located. The small projections 2 can have various forms. For instance also irregular forms (grit or small crystals, such as those shown in Figure 1, provided their dimensions and, especially, their average height relative to the plane of the face of the plate whereon they are added, however small, is not negligible, to allow an effective skid-proofing effect. The fact that the small projections 2 are obtained by relief, with a material whose mechanical consistency is similar to that of glass, allows to obtain a very effective skid-proofing effect without diminishing in any way the mechanical strength of the pane 1. The pane 1 can be used as an anti-skid paving element in floors, steps, walkways, pathways, etc..

In an embodiment, shown in Figure 1, the small projections 2 are distributed on the larger face 1a, 1b in a uniform manner, offering a complete anti-skid surface. Alternatively, the small projections 2 are distributed on the larger face 1a,1b according to a predetermined design, which can be decorative or of another nature. The particular distribution of the small projections 2 is very important with respect to usage of the pane also as a spatially selective light diffuser.

In the method of the invention for fabricating a glass pane 1 of the type described, one proceeds with a phase of laying on a first of the larger faces 1a, 1b of the pane 1 an adhesive primer in the positions provided for the small added projections 2. The primer can be laid using common serigraphy techniques, avoiding the drying phase, so that it will remain sticky. Subsequently, one proceeds with distributing, in substantially uniform manner over the first greater face 1a, 1b, fine grit made of material based on glass dust. Such distribution can be effected in several ways, more or less automated or manually, for instance using sieves fed with the glass dust. Immediately thereafter, once the grit has stuck on the primer, one proceeds with a phase of lifting the pane 1 sideways to eliminate the grit not captured by the adhesive primer. The grit not attached to the primer falls by gravity and it may be retrieved for a subsequent re-use.

The quantity of grit laid uniformly on the pane and the thickness of the primer depend on the height and on the characteristics required for the small added projections 2. The use of glass grit is advantageous because it can allow using ground recycled glass.

The pane 1, kept horizontal with the first face 1a, 1b oriented upwards, is then subjected to a heating phase to a temperature sufficient to melt the grit, causing it to adhere definitively to the first larger face 1a, 1b and conferring it the shape of the small added projections 2. To facilitate the process, the glass grit in use can be modified, by adding components, to lower or adjust its melting point according to requirements.

A phase of cooling the pane 1 is then carried out.

Advantageously, the heating phase takes place at temperatures suitable for tempering glass (which for float glass, for instance, generally range between 680°C and 710°C). The heating can be conducted in a normal tempering furnace, so that the pane can be tempered simultaneously with the formation and consolidation of the small projections 2.

The adhesive primer can be a carbomethylcellulose based material.

Opportunely, the pane 1 is layered, i.e. composed by multiple layers joined together by thin layers of clear plastic material. In this case, the pane is made of so-called safety glass, for instance of the kind used to manufacture motor vehicle windshields.

The pane 1 can be monolithic and also tempered, also for safety reasons, but compared to a layered pane it has greater risks of injury in case of breakage. The pane 1 can have indentations 13 along the edges, for the insertion of parts of sections for mutually joining the panes 1, in such a way as to obtain anti-skid pavements without inconvenient steps, but flush on the plane. Said indentations 13 can be obtained by grinding, or by using a smaller upper glass layer in laminating the pane 1 when it is layered.

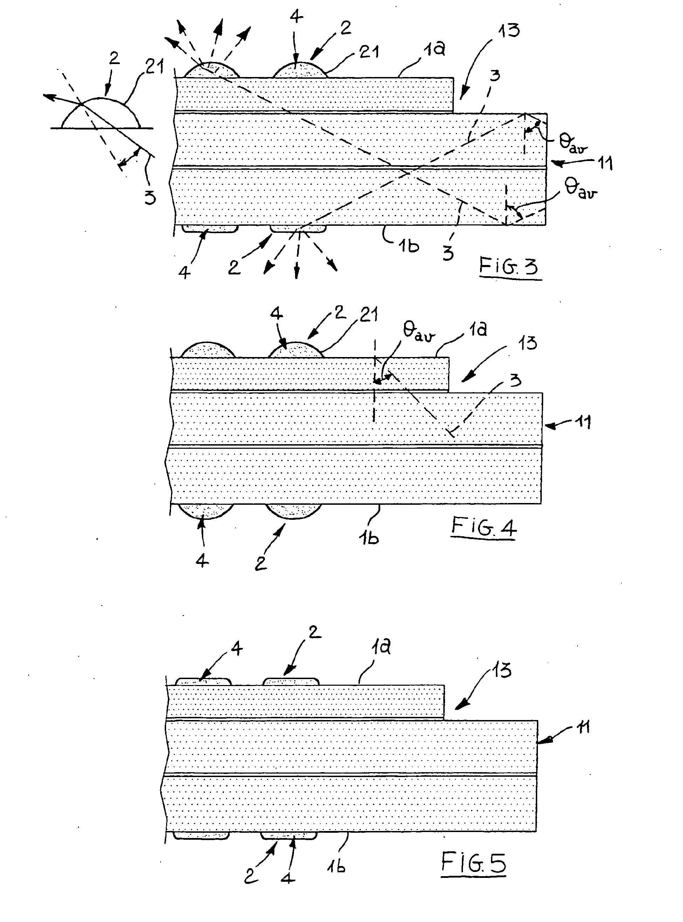

Very advantageously, the small added projections 2 are made of a material that is at least partially non light-absorbing, and so structured that light beams 3 previously conveyed into the thickness of the pane 1 itself and trapped therein by total reflection can escape outside the pane 1 mainly through them. The pane 1 thereby achieves the outward diffusion of light conveyed into its thickness and trapped therein by total reflection in a spatially selective manner. Partial transparency, combined with the characteristics of the material, similar to those of glass, allows light freely to penetrate inside the small added projections and not to be totally absorbed by them. Due to the particular structure of the small projections 2 (inherent characteristics of the material whereof they are made and of their geometry), the light beams 3 belonging to the part of said light which would remain trapped in the pane by total reflection, because of the even partial traversing of the small projections 2, find their angle of incidence altered at the interface between glass and air or between the materials whereof the small projections 2 are made (which, because its characteristics are similar, on average, to those of glass, has an average refraction index that is very close to that of glass) and air. This can allow them, during propagation, to overcome said interface and escape outwards. This phenomenon is graphically illustrated in Figure 3.

By optimising the material and/or geometric structure of the small added projections 2, it is possible to make this effect extremely selective, causing those light beams which would remain trapped in the pane 1 by total reflection to be able to escape therefrom only in correspondence with the small added projections 2. This enables, with an illumination that conveys light into the thickness of the pane, to highlight the drawing according to which the small projections 2 are distributed. As stated, its distribution can be uniform, in which case the pane will diffuse light uniformly. Alternatively, as shown for instance in Figure 2, the small projections 2 are distributed on the larger face 1a, 1b with decreasing density from the edges of the pane towards the centre. Alternatively, the particular design obtained by the distribution of the small projections 2 and highlighted by the illumination conveyed into the thickness can be a decorative motif, a signal, a safety indication, etc.. A decorative or signalling pavement is thereby obtained which diffuses light in a selective manner and is anti-skid.

As shown in Figures 3 to 5, the small projections 2 can be placed on both larger faces 1 a, 1 b of the pane 1. In this way, conveying light into the thickness, it is possible to obtain, by means of the part of the light that would be trapped therein by total reflection, a diffused lighting that is spatially selective both of the space overlying the pane and the space underlying the pane. In this case, advantageously, as shown always in the aforementioned figures 3-5, the small projections 2 are in correspondence with each other on the two larger faces 1 a, 1 b of the pane 1, although they can be different on said two faces. Obviously, it is not essential for the small projections 2 to be all identical on a larger face 1a, 1b. They can have different geometries and structures, and be made with different materials or with different characteristics.

If both sides of the pane 1 are to be coated with projections, all the process phases for obtaining the small added projections 2 on the first larger face 1a, 1b are subsequently repeated on a second greater face 1a, 1b opposite the first. In this second part of the process, instead of using exactly the same phases as above and glass powder based grit, it is also possible to lay small added projections 2 on a second larger face 1a,1b opposite the first by serigraphic deposition of at least light-diffusing material.

In the case of layered pane 1, the process phases for obtaining the small added projections 2 on the first and on the second larger face 1 a, 1 b are carried out separately on the corresponding two glass layers (the upper one and the lower one) before the mutual union of all layers composing the pane 1.

In a preferred embodiment of the invention, inside the small projections 2 are dispersed extremely small particles 4 acting as light diffusion centres (for instance made of alumina, corundum, titanium oxide or the like).

The material of the small projections 2 can be coloured. It is thereby possible to obtain lighted multicoloured decorative or signalling motifs on the larger surfaces 1 a and 1 b of the pane 1.

The material of the small projections 2 can opportunely be based on re-melted glass dust, which can also be coloured as a paste, can be of float or sodic-calcic glass, aluminosilicate glass, borosilicate glass, glass containing lead, or variously modified glass. The dispersion of diffusive elements (i.e. of the small particles 4) can be constituted by materials that melt at temperatures higher than the glass transition temperature of the glass.

The small projections 2, as shown in Figure 5 (on the larger faces 1a and 1 b) or in Figure 3 (on the larger face 1 b) can have the shape of usual buttons.

Advantageously, the composition of the glass dust based grit can be modified in such a way that the grit has such a viscosity in the melted state as to cause it to assume during heating, due to gravity and surface tension, lenticular shape in each of the positions provided for the small added projections 2. By appropriately playing with this parameter, it is possible to modify curvature and height of the so obtained lenticules 21. Thus, as shown in Figures 2, 3 (on the larger face 1a) and 4, the small projections 2 have substantially lenticular shape to allow the beams 3 to escape from the pane 1 by refractive effect. The lenticules 21 can contain the small particles 4 (in which case, the diffusive effect will combine with the refractive effect to allow the light trapped in the pane by total reflection to escape from the pane). Alternatively, as shown in detail on the left side of Figure 3, said lenticules 21 can also not contain the small particles 4, and hence operate purely by refractive effect. In this case, modifying the shape and curvature of the lenticules 21 it is possible to obtain effects whereby the emission is oriented or geometrically distributed in space, regulating the illumination of the spaces confining with the pane 1 according to desired criteria.

The small projections 2 can also have in the plane of the pane 1 any appropriate or desired shape. Their mean or maximum height can be predetermined depending on requirements, in particular according to skid-proofing and/or light diffusion efficiency. For example, if they incorporate the particles 4, the thickness and/or the height of the small projections 2 shall have to be in relation to the density of the particles 4, to allow an effective diffusing action by the particles 4. In the case of lenticular shape, the small added projections 2 may also have a planar width of a few millimetres and have a height in the order of a millimetre or even greater, depending on requirements. The shape of the small added projections 2 could also be irregular, for instance similar to that of an abrasive grit with not wholly negligible dimensions and/or appropriate grain size. In the case of skid-proof walkways for locations where water or humidity is present and whereon one can walk barefoot, such as near swimming pools, the lenticular or button form is most appropriate.

The panes 1 made with the method of the invention may make an emergency path (or escape route) clearly visible.

The invention thus conceived can be subject to numerous modifications and variations, without thereby departing from the scope of the inventive concept. Moreover, all components can be replaced with technically equivalent elements. In practice all materials used, as well as dimensions, may be any, depending on requirements.

## Claims

1. Method for fabricating a skid-proof glass pane (1) for construction, lighting engineering and decoration purposes comprising the phase of taking a glass pane (1) having two larger faces (1a,1b), **characterised in that** it further comprises the following phases:
- laying an adhesive primer on a first of the larger faces (1 a, 1 b) of the pane (1), the adhesive primer being distributed in a plurality of positions provided for small added projections (2) to be produced on the first of the larger faces (1a, 1 b) of the pane (1);
- distributing, in substantially uniform manner over the whole first larger face (1a,1b), fine grit made of glass dust based material;
- lifting the pane (1) sideways to eliminate the grit not captured by the adhesive primer;
- heating the pane (1), kept horizontal with the first larger face (1a, 1b) oriented upwards, to such a temperature as to melt the grit, making it adhere in a definitive manner to the first larger face (1 a, 1 b) and conferring it the shape of small added projections (2) located in the positions provided for them;
- cooling the pane (1);
the so obtained small added projections (2) being so shaped and distributed as to render skid-proof at least areas of the larger face (1 a, 1 b) whereon they are located.

2. Method as claimed in claim 1, **characterised in that** the small projections (2) are distributed on the larger face (1a,1b) in a uniform manner.

3. Method as claimed in claim 1 or 2, **characterised in that** the small projections (2) are distributed on the larger face (1a, 1b) according to a predetermined design.

4. Method as claimed in claim 3, **characterised in that** the small projections (2) are distributed on the larger face (1a, 1b) with decreasing density from the edges of the pane towards the centre.

5. Method as claimed in any of the previous claims, **characterised in that** inside the small projections (2) are dispersed very small particles (4) acting as light diffusion centres, the small particles (4) being constituted by materials that melt at temperatures higher than the glass transition temperature of the glass.

6. Method as claimed in claim 5, **characterised in that** the materials, by which the small particles (4) are constituted, are selected among alumina, corundum, titanium oxide or the like.

7. Method as claimed in any of the previous claims, **characterised in that** the material of the small projections (2) is coloured.

8. Method as claimed in any of the previous claims, **characterised in that** the heating phase occurs at temperatures suitable for tempering glass.

9. Method as claimed in any of the previous claims, **characterised in that** all process phases for obtaining the small projections (2) added on the first larger face (1 a, 1 b) are subsequently repeated on a second larger face (1a,1b) opposite the first.

10. Method as claimed in any claim from 1 to 8, **characterised in that** on a second larger phase (1 a, 1 b) opposite the first are laid small projections (2) added by means of serigraphic laying of at least light diffusing material.

11. Method as claimed in claim 9 or 10, **characterised in that**, in the case of layered pane (1) the process phases for obtaining the small projections (2) added on the first and on the second larger face (1a, 1b) are separately conducted on the corresponding two glass layers before mutually joining all the layers comprising the pane (1).

12. Method as claimed in any of the previous claims, **characterised in that** the grit has such a viscosity in the melted state as to cause it to assume during heating, by gravity and surface tension, lenticular shape in each of the positions provided for the small added projections (2).

13. Method as claimed in any of the previous claims, **characterised in that** the primer is a carbomethylcellulose based material.

## Patentansprüche

1. Verfahren zur Herstellung einer rutschfesten Glasscheibe (1) für Konstruktion, Lichttechnik und Dekoration, enthaltend die Phase des Aufnehmens einer Glasscheine (1) mit zwei grösseren Flächen (1a, 1b), **dadurch gekennzeichnet, dass** es ausserdem die folgenden Phasen enthält:
- Aufbringen einer Haftgrundierung auf eine erste der grösseren Flächen (1a, 1b) der Scheibe (1), wobei die Haftgrundierung auf eine Anzahl von Positionen verteilt wird, vorgesehen für kleine aufgetragene Vorsprünge (2), die auf der ersten der grösseren Flächen (1a, 1b) der Scheibe (1) hergestellt werden sollen;
- Verteilen in einer im wesentlichen gleichmässigen Weise über der gesamten ersten grösseren Fläche (1a, 1b) von feinem Splitt, hergestellt aus einem auf Glasstaub basierenden Material;
- seitliches Anheben der Scheibe (1), um den nicht von der Haftgrundierung festgehaltenen Splitt zu entfernen;
- Erhitzen der Scheibe (1), die mit ihrer ersten grösseren Fläche (1a, 1b) nach oben gerichtet horizontal gehalten wird, auf solche eine Temperatur, dass der Splitt geschmolzen wird und in endgültiger Weise an der ersten grösseren Fläche (1a, 1b) anhaftet und ihm die Form von kleinen aufgetragenen Vorsprüngen (2) verliehen wird" angeordnet in den für diese vorgesehenen Positionen;
- Abkühlen der Scheibe (1);
wobei die so erhaltenen kleinen aufgetragenen Vorsprünge (2) so geformt und verteilt sind, dass wenigstens die Bereiche der grösseren Fläche (1a, 1b) rutschfest gemacht ist, in denen sie angeordnet sind.

2. Verfahren n ach Patentanspruch 1, **dadurch gekennzeichnet, dass** die kleinen Vorsprünge (2) auf der grösseren Fläche (1a, 1b) in gleichmässiger Weise verteilt sind.

3. Verfahren nach Patentanspruch 1 oder 2, **dadurch gekennzeichnet, dass** die kleinen Vorsprünge (2) auf der grösseren Fläche (1a, 1b) nach einem vorgegebenen Muster verteilt sind.

4. Verfahren n ach Patentanspruch 3, **dadurch gekennzeichnet, dass** die kleinen Vorsprünge (2) auf der grösseren Fläche (1a, 1b) mit abnehmender Dichte von den Rändern der Scheibe zur Mitte hin verteilt sind.

5. Verfahren nach jedem der vorstehenden Patentansprüche, **dadurch gekennzeichnet, dass** im Inneren der kleinen Vorsprünge (2) sehr kleine Partikel (4) dispergiert sind, die als Diffusionszentren des Lichtes wirken, wobei die kleinen Partikel (4) aus Materialien hergestellt sind, die bei höheren Temperaturen schmelzen als die Erweichungstemperatur des Glases.

6. Verfahren n ach Patentanspruch 5, d adurch **gekennzeichnet**, dass die Materialien, aus welchen die kleinen Partikel (4) hergestellt sind, aus Tonerde, Korund, Titandioxid oder ähnlichem gewählt sind.

7. Verfahren nach jedem der vorstehenden Patentansprüche, **dadurch gekennzeichnet, dass** das Material der kleinen Vorsprünge (2) eingefärbt ist.

8. Verfahren nach jedem der vorstehenden Patentansprüche, **dadurch gekennzeichnet, dass** die Phase des Erhitzen bei Temperaturen erfolgt, die zum Tempern von Glas geeignet sind.

9. Verfahren nach jedem der vorstehenden Patentansprüche, **dadurch gekennzeichnet, dass** alle Verfahrensphasen zum Erhalten der kleinen Vorsprünge (2), die auf die erste grössere Fläche (1a, 1b) aufgetragen sind, anschliessend auf einer zweiten grösseren Fläche (1a, 1b), entgegengesetzt von der ersten, wiederholt werden.

10. Verfahren n ach jedem der Patentansprüche von 1 bis 8, **dadurch gekennzeichnet, dass** auf einer zweiten grösseren Fläche (1a, 1b), entgegengesetzt von der ersten, kleine Vorsprünge (2) aufgetragen werden, und zwar mit Hilfe des Beschichtens im Siebdruckverfahren mit wenigstens einem lichtstreuenden Material.

11. Verfahren nach Patentanspruch 9 oder 10, **dadurch gekennzeichnet, dass** im Falle einer Verbundscheibe (1) die Verfahrensphasen zum Erhalten der kleinen Vorsprünge (2), aufgetragen auf die erste und auf die zweite grössere Fläche (1a, 1b), getrennt an den entsprechenden beiden Glaslagen ausgeführt werden, bevor alle Lage, welche die Scheibe (1) enthält, miteinander verbunden werden.

12. Verfahren nach jedem der vorstehenden Patentansprüche, **dadurch gekennzeichnet, dass** der Splitt in geschmolzenem Zustand eine solche Viskosität hat, dass er während des Erhitzens durch Schwerkraft und Oberflächenspannung in jeder für die kleinen aufgetragenen Vorsprünge (2) vorgesehenen Position eine Linsenform annimmt.

13. Verfahren nach jedem der vorstehenden Patentansprüche, **dadurch gekennzeichnet, dass** die Haftgrundierung ein auf Carbomethylcellulose basierendes Material ist.

## Revendications

1. Procédé pour fabriquer une dalle de verre antidérapante (1) pour construction, technique d'illumination et décoration, comprenant la phase de prendre une dalle de verre (1) ayant deux faces majeures (1a, 1b), **caractérisé en ce qu'**il comprend de plus les phases suivantes:
- dépôt d'un apprêt adhésif sur une première des faces majeures (1a, 1b) de la dalle (1), l'apprêt adhésif étant distribué dans une pluralité de positions prévues pour de petites saillies rapportées (2) devant être produites sur la première des faces majeures (1a, 1b) de la dalle (1);
- distribution, de manière substantiellement uniforme sur toute la première face majeure (1a, 1b), de grès fin constitué d'un matériau à base de poussière de verre;
- soulèvement de la dalle (1) latéralement pour éliminer le grès non capturé par l'apprêt adhésif;
- réchauffement de la dalle (1), maintenue horizontale avec la première face majeure (1a, 1b) orientée vers le haut, à une température telle que le grès fonde, de manière à le faire adhérer de manière définitive à la première face majeure (1a, 1b) et à lui conférer la forme de petites saillies rapportées (2) disposées dans les positions prévues pour elles;
- refroidissement de la dalle (1);
les petites saillies rapportées (2) ainsi obtenues étant conformées et distribuées de manière à rendre antidérapantes au moins les aires de la face majeure (1a, 1b) sur lesquelles elles sont disposées.

2. Procédé selon la revendication 1, **caractérisé en ce que** les petites saillies (2) sont distribuées sur la face majeure (1a, 1b) de manière uniforme.

3. Procédé selon la revendication 1 ou 2, **caractérisé en ce que** les petites saillies (2) sont distribuées sur la face majeure (1a, 1b) selon un dessin prédéterminé.

4. Procédé selon la revendication 3, **caractérisé en ce que** les petites saillies (2) sont distribuées sur la face majeure (1a, 1b) avec une densité décroissante des bords de la dalle vers son centre.

5. Procédé selon n'importe laquelle des revendications précédentes, **caractérisé en ce qu'**à l'intérieur des petites saillies (2) sont dispersées de très petites particules (4) agissant comme des centres de diffusion de la lumière, les petites particules (4) étant constituées de matériaux qui fondent à des températures supérieures à la température de transition vitreuse du verre.

6. Procédé selon la revendication 5, **caractérisé en ce que** les matériaux, qui constituent les petites particules (4), sont sélectionnés parmi l'alumine, le corindon, l'oxyde de titane ou produits similaires.

7. Procédé selon n'importe laquelle des revendications précédentes, **caractérisé en ce que** le matériau des petites saillies (2) est coloré.

8. Procédé selon n'importe laquelle des revendications précédentes, **caractérisé en ce que** la phase de réchauffement se produit à des températures adaptées au trempage du verre.

9. Procédé selon n'importe laquelle des revendications précédentes, **caractérisé en ce que** toutes les phases de travail pour l'obtention des petites saillies (2) rapportées sur la première face majeure (1a, 1b) sont ensuite répétées sur une seconde face majeure (1a, 1b) opposée à la première.

10. Procédé selon n'importe laquelle des revendications 1 à 8, **caractérisé en ce que** sur une seconde face majeure (1a, 1b) opposée à la première sont déposées de petites saillies (2) rapportées au moyen d'un dépôt sérigraphique de matériau au moins diffusant la lumière.

11. Procédé selon la revendication 9 ou 10, **caractérisé en ce que**, dans le cas d'une dalle stratifiée (1), les phases de processus pour l'obtention des petites saillies (2) rapportées sur la première et sur la seconde face majeure (1a, 1b) sont exécutées séparément sur les deux couches de verre correspondantes avant l'union entre elles de toutes les couches composant la dalle (1).

12. Procédé selon n'importe laquelle des revendications précédentes, **caractérisé en ce que** le grès a une viscosité telle à l'état fondu qu'il assume pendant le réchauffement, par gravité et tension de surface, une forme lenticulaire dans chacune des positions prévues pour les petits éléments rapportés (2).

13. Procédé selon n'importe laquelle des revendications précédentes, **caractérisé en ce que** l'apprêt est un matériau à base de carbométhyle de cellulose.
